# EUROPEAN PATENT APPLICATION

(11) **EP 4 592 064 A1**
(43) Date of publication of application: **30.07.2025**
(21) Application number: 23938712.9
(22) Date of filing: 16.11.2023
(51) Int. Cl.: B29C 65/46, B29C 43/14

(54) **PRODUCTION METHOD FOR METAL/RESIN JOINED BODY**

(71) Applicant: Mutsuki Electric Co., Ltd., Osaka-shi, Osaka 544-0004 (JP)
(72) Inventor: The designation of the inventor has not yet been filed
(74) Representative: Ricker, Mathias
(86) International application number: PCT/JP2023/041368
(87) International publication number: WO 2025/104895

(57) **Abstract**

While maintaining the shape of a synthetic resin member that has previously been molded into a predetermined shape, a metal-resin joined body having high joining strength is obtained.

In a method for producing a metal-resin joined body 30 in which a metal member 20 and a synthetic resin member 10 are joined together, a first step of bringing a metal joining surface 22 heated to a first temperature T1 into contact with a resin joining surface 12, and pressurizing the metal member 20 and the synthetic resin member 10 at a first pressure P1, and a second step of pressurizing the metal member 20 and the synthetic resin member 10 at a second temperature T2, which is lower than the first temperature T1, and a second pressure P2, which is higher than the first pressure P1, are performed.

## Description

### Technical Field

The present invention relates to a method for producing a metal-resin joined body.

### Background Art

A metal-resin joined body in which a metal member made of a metal and a synthetic resin member made of a synthetic resin are joined together is known (see, e.g., PTL 1 below). In the case of joining a metal member to a synthetic resin member, the synthetic resin member and the metal member are pressurized in a heated state to join the two members together.

In addition, in a metal-resin joined body, in order to enhance the joining strength between the metal member and the synthetic resin member, on the surface of the metal member to which the synthetic resin member is joined (metal joining surface), a roughened portion (anchoring portion) is sometimes formed by laser irradiation or chemical etching. In the case of producing such a metal-resin joined body, in order to fill the inside of the roughened portion formed on the metal joining surface with a resin, the synthetic resin member and the metal member are pressurized while heating and melting a resin material that constitutes the synthetic resin member, and the melted resin material is brought into contact with the metal joining surface of the metal member.

### Citation List

### Patent Literature

PTL 1: JP5998303B

### Summary of Invention

### Technical Problem

However, with the conventional production method in which a synthetic resin member and a metal member are pressurized in a heated state and joined together, in the case where a synthetic resin member that has previously been molded into a predetermined shape is joined to a metal member, it is difficult to firmly join the metal member and the synthetic resin member together while maintaining the shape of the synthetic resin member.

The invention has been accomplished in view of the above points, and an object thereof is to provide a method for producing a metal-resin joined body, which is capable of firmly joining a synthetic resin member to a metal member made of a metal material while maintaining the shape of the synthetic resin member that has previously been molded into a predetermined shape.

### Solution to Problem

According to this embodiment, the following aspects [1] to [7] are provided.
[1] A method for producing a metal-resin joined body by bringing a metal joining surface of a metal member into contact with a resin joining surface of a resin member molded into a predetermined shape to join the metal member and the resin member together,
   the method for producing a metal-resin joined body including:
   a first step of bringing the resin joining surface into contact with the metal joining surface heated to a first temperature, and pressurizing the metal member and the resin member at a first pressure; and
   a second step of, with the metal joining surface having a second temperature that is lower than the first temperature, pressurizing the metal member and the resin member at a second pressure that is higher than the first pressure.
[2] The method for producing a metal-resin joined body according to [1] above, in which after the first step is executed, the heating of the metal joining surface is stopped or the amount of heating is reduced, and also the pressure at which the metal member and the resin member are pressurized is changed from the first pressure to the second pressure to execute the second step.
[3] The method for producing a metal-resin joined body according to [1] above, in which after the first step is executed, the temperature of the metal joining surface is lowered to the second temperature, and then the pressure at which the metal member and the resin member are pressurized is changed from the first pressure to the second pressure to execute the second step.
[4] The method for producing a metal-resin joined body according to any one of [1] to [3] above, in which the first temperature is a temperature that is equal to or higher than the melting point of a resin material that constitutes the resin member.
[5] The method for producing a metal-resin joined body according to [4] above, in which the first temperature is equal to or higher than the melting point of the resin material and equal to or lower than an upper limit temperature that is 20°C higher than the melting point of the resin material.
[6] The method for producing a metal-resin joined body according to [3] above, in which the second temperature is equal to or lower than a temperature that is 10°C higher than the melting point of a resin material that constitutes the resin member.
[7] The method for producing a metal-resin joined body according to [6] above, in which the first temperature is equal to or higher than the melting point of the resin material and equal to or lower than an upper limit temperature that is 20°C higher than the melting point of the resin material, and the second temperature is equal to or lower than a temperature that is 10°C higher than the melting point of the resin material and equal to or higher than a lower limit temperature that is 20°C lower than the melting point of the resin material.

### Advantageous Effects of Invention

According to the method for producing a metal-resin joined body described above, the joining strength between a metal member and a synthetic resin member can be improved while maintaining the shape of the synthetic resin member that has previously been molded into a predetermined shape.

### Brief Description of Drawings

[FIG. 1] A cross-sectional view of a metal-resin joined body produced by a method for producing a metal-resin joined body according to one embodiment of the invention
[FIG. 2] A diagram showing a first step of a method for producing a metal-resin joined body according to one embodiment of the invention

### Description of Embodiments

Hereinafter, embodiments of the invention will be described with reference to the drawings. In the drawings, the sizes of members and the like may be exaggerated for illustrative purposes. The invention is not limited to the following embodiments. The following embodiments are presented as examples and are not intended to limit the scope of the invention. Novel embodiments can be implemented in other various forms, and various omissions, substitutions, and modifications can be made without departing from the gist of the invention.

### (1) Metal-Resin Joined Body 30

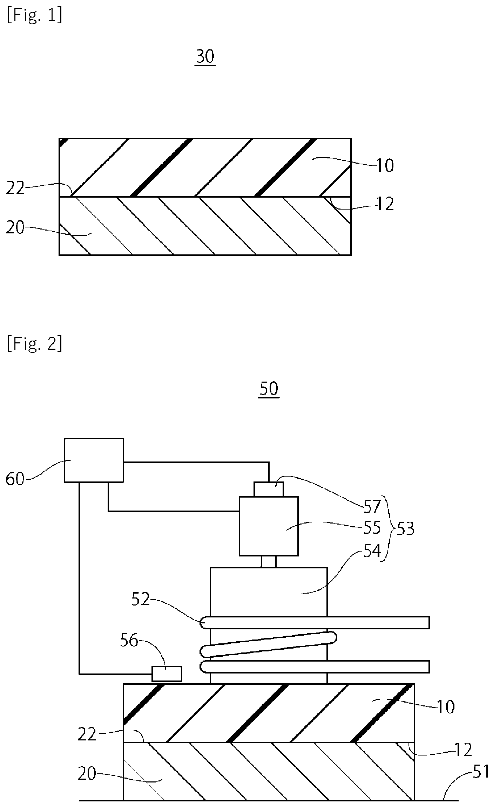

First, a metal-resin joined body 30 produced by a production method of this embodiment will be described. As shown in FIG. 1, the metal-resin joined body 30 includes a synthetic resin member 10 made of a thermoplastic synthetic resin and a metal member 20 made of a metal.

One surface of the synthetic resin member 10 is a resin joining surface 12 that joins to the metal member 20. One surface of the metal member 20 is a metal joining surface 22 that joins to the resin joining surface 12 of the synthetic resin member 10. In the metal-resin joined body 30, the resin joining surface 12 of the synthetic resin member 10 and the metal joining surface 22 of the metal member 20 are joined together.

### (2) Synthetic Resin Member 10

The synthetic resin member 10 is a member formed of a thermoplastic resin molded into a predetermined shape such as a block, plate, or wire shape by a known method such as injection molding, extrusion molding, or compression molding.

Specific examples of thermoplastic synthetic resins for constituting the synthetic resin member 10 include polypropylene resins (PP resins), polyoxymethylene resins (POM resins), polyphenylene sulfide resins (PPS resins), polyetheretherketone resins (PEEK), acrylonitrile/butadiene/styrene resins (ABS resins), polyethylene resins (PE resins), polybutylene terephthalate resins (PBT resins), polyamide resins (PA resins) such as Nylon 66 (PA66), epoxy resins, liquid crystal polymers (LCP resins), modified polyphenylene ether resins (modified PPE), reactor type soft polypropylene-based resins (metallocene-based reactor type TPO resins), perfluoroalkoxyalkane resins (PFA resins), polyacrylamide resins (PAM resins), acrylic resins (PMMA resins), polycarbonate resins (PC resins), polyvinylidene fluoride resins (PVDF resins), polyvinylidene chloride resins (PVCD resins), polyphenylene sulfide resins (PPS resins), polyvinyl chloride resins (PVC resins), polyethylene terephthalate resins (PET resins), polyvinyl fluoride resins (PVF resins), polystyrene resins (PS resins), polyvinyl alcohol resins (PVA resins), paraffin resins, polytetrafluoroethylene resins (PTFE resins), and hexafluoropropylene resins (HFP resins).

In addition, the synthetic resin member 10 may be a carbon fiber-reinforced thermoplastic (CFRTP), which is the thermoplastic synthetic resin as described above incorporating carbon fibers, or may also be the thermoplastic synthetic resin as described above incorporating a reinforcing material such as glass fibers or talc, a flame retardant, an antidegradant, an elastomer component, or the like.

### (3) Metal Member 20

The metal member 20 is a member formed of a metal molded into a predetermined shape such as a block, plate, or wire shape. Metals for constituting the metal member 20 are not particularly limited, and various metals can be used.

For example, as metals for constituting the metal member 20, copper (Cu), iron (Fe), aluminum (Al), titanium (Ti), nickel (Ni), chromium (Cr), and the like may be used. In addition, the metal member 20 may be composed of an alloy of two or more metals, such as a copper alloy, an iron alloy (steel material), an aluminum alloy, stainless steel, a titanium alloy, a nickel alloy, or a chromium alloy.

The shape of the metal member 20 can be any desired shape according to the intended use and the like. As the molding method for the metal member 20, any method can be applied, and it is possible to use casting in which a molten metal or the like is poured into a mold of a desired shape, cutting using a machine tool or the like, or punching using a press machine or the like, for example.

Before a first step and a second step, which will be described later, are performed, the metal member 20 may be subjected to a roughening treatment to provide a textured, roughened portion on the metal joining surface 22. Various methods can be employed for the roughening treatment. For example, a roughened portion may be formed on the metal joining surface 22 by irradiation with laser light, chemical etching, or pressing.

### (4) Method for Producing Metal-Resin Joined Body 30

The metal-resin joined body 30 is obtained by subjecting the synthetic resin member 10 described in (2) above and the metal member 20 described in (3) above to the first step and the second step. In this embodiment, the first step and the second step are performed using a joining apparatus 50 as shown in FIG. 2 to produce the metal-resin joined body 30.

The joining apparatus 50 includes a stage 51 on which the metal member 20 is mounted, a heating apparatus 52 that inductively heats the metal member 20 mounted on the stage 51, a press apparatus 53 that pressure-joins the synthetic resin member 10 to the metal member 20, and a control apparatus 60 that controls the heating apparatus 52 and the press apparatus 53.

The heating apparatus 52 includes an induction heating coil connected to a power supply apparatus (not shown). When drive power is input from the power supply apparatus in response to a command from the control apparatus 60, a magnetic field is generated from the induction heating coil to inductively heat the metal joining surface 22 of the metal member 20 mounted on the stage 51.

The heating apparatus 52 includes a temperature sensor 56 that measures the temperature of the metal joining surface 22 of the metal member 20 mounted on the stage 51. The temperature of the metal joining surface 22 detected by the temperature sensor 56 is input to the control apparatus 60. Based on the detected temperature input from the temperature sensor 56, the control apparatus 60 controls the output of the heating apparatus 52 such that the temperature of the metal joining surface 22 becomes a predetermined temperature.

Incidentally, in this embodiment, the temperature sensor 56 is composed of a noncontact radiation thermometer and measures the temperature of a portion of the induction heating coil of the heating apparatus 52 proximate to the synthetic resin member 10. In the temperature sensor 56, the correlation of the measured temperature with a thermocouple provided between the resin joining surface 12 and the metal joining surface 22 has previously been investigated. That is, with a thermocouple being provided between the resin joining surface 12 and the metal joining surface 22, the temperature has been measured in the temperature sensor 56 and the thermocouple while heating the metal joining surface 22 by the heating apparatus 52 to investigate the correlation of the measured temperature between the temperature sensor 56 and the thermocouple. In the temperature sensor 56, the temperature of the thermocouple estimated from the measurement results based on the correlation with the thermocouple is taken as the temperature of the metal joining surface 22.

The press apparatus 53 includes a rod 54 formed from a ceramic or like insulator, a pressurization section 55 that moves the rod 54 to press the synthetic resin member 10 against the metal member 20, and a pressure sensor 57 that detects the pressure acting on the synthetic resin member 10 when the rod 54 presses the synthetic resin member 10 against the metal member 20.

As shown in FIG. 2, the rod 54 may be inserted into the hollow part of the induction heating coil that the heating apparatus 52 has, and placed to face the synthetic resin member 10.

The pressurization section 55 includes a servo motor capable of variably controlling the applied pressure, a pneumatic cylinder controlled by an electro-pneumatic regulator, a spring type pressurizer, and the like. In response to a command from the control apparatus 60, the pressurization section 55 can control the speed of moving the synthetic resin member 10 together with the rod 54, the position thereof, and the pressure when pressing the synthetic resin member 10 against the metal member 20.

The pressure sensor 57 detects the pressure acting on the synthetic resin member 10 when the synthetic resin member 10 comes into contact with the metal member 20 and pressurizes the metal member 20, and inputs the detected pressure to the control apparatus 60. Based on the detected pressure input from the pressure sensor 57, the control apparatus 60 controls the output of the pressurization section 55 of the press apparatus 53 such that the pressure acting on the synthetic resin member 10 becomes a predetermined pressure.

The control apparatus 60 includes a computer and is connected to the heating apparatus 52, the press apparatus 53, the temperature sensor 56, and the pressure sensor 57.

The control apparatus 60 controls the operation of the heating apparatus 52 and the press apparatus 53 according to the detection results of the temperature sensor 56 and the pressure sensor 57 and also to a preset program, thereby joining the resin joining surface 12 to the metal joining surface 22 mounted on the stage 51 to integrate the metal member 20 and the synthetic resin member 10.

Specifically, for the production of the metal-resin joined body 30 using the joining apparatus 50, the metal member 20 is mounted on the stage 51 such that the metal joining surface 22 faces the synthetic resin member 10, which will be set later.

Incidentally, in the case where the metal joining surface 22 of the metal member 20 is roughened by the roughening treatment or an oxide film is formed on the metal joining surface 22 by a heating oxidation treatment or the like, it is possible that the roughening treatment or the heating oxidation treatment is performed before the metal member 20 is mounted on the stage 51, and the metal member 20 is placed such that the treated surface faces the synthetic resin member 10, which will be set later.

Next, the resin joining surface 12 is placed to face the metal joining surface 22 of the metal member 20 mounted on the stage 51. As shown in FIG. 2, in this embodiment, the synthetic resin member 10 is placed such that the resin joining surface 12 contacts the metal joining surface 22.

Next, the heating apparatus 52 is placed to face the metal joining surface 22 of the metal member 20 across the synthetic resin member 10. In the case shown in FIG. 2, the heating apparatus 52 is placed above the synthetic resin member 10, and the synthetic resin member 10 is placed between the heating apparatus 52 and the metal member 20.

Next, the first step, in which the metal joining surface 22 is heated to a first temperature T1 by the heating apparatus 52, thereby heating the resin joining surface 12 in contact with the metal joining surface 22 to the first temperature T1, and also, in the state of being heated to the first temperature T1, the metal member 20 and the synthetic resin member 10 are pressurized at a first pressure P1, is performed.

Specifically, the control apparatus 60 supplies drive power to the heating apparatus 52, and a magnetic field is generated from the induction heating coil provided in the heating apparatus 52 to heat the metal joining surface 22 of the metal member 20. At that time, the drive power supplied to the heating apparatus 52, the position of the induction heating coil provided in the heating apparatus 52, and the like are adjusted such that the temperature of the metal joining surface 22 detected by the temperature sensor 56 becomes the first temperature T1.

Together with the heating of the metal member 20 as described above, the press apparatus 53 moves the rod 54 to press the synthetic resin member 10 against the metal member 20, and pressurizes the synthetic resin member 10 and the metal member 20 such that the pressure detected by the pressure sensor 57 becomes the first pressure P1. As a result of this, the press apparatus 53 brings the resin joining surface 12 into contact with the metal joining surface 22 heated to the first temperature T1, and pressurizes the synthetic resin member 10 and the metal member 20 at the first pressure P1.

For example, the press apparatus 53 pressurizes the synthetic resin member 10 and the metal member 20 at the first pressure P1 for a predetermined time Sp1 (e.g., 0.1 seconds or more and 10 seconds or less). While the press apparatus 53 is pressurizing the synthetic resin member 10 and the metal member 20 at the first pressure P1, the heating apparatus 52 preferably continues to heat the metal member 20 such that the temperature of the metal joining surface 22 is maintained at the first temperature T1.

Incidentally, while the heating apparatus 52 is raising the temperature of the metal joining surface 22 to the first temperature T1, the press apparatus 53 may pressurize the synthetic resin member 10 and the metal member 20 at the first pressure P1. For example, while performing pressurization at the first pressure P1, the temperature of the metal joining surface 22 is raised to reach the first temperature T1 from room temperature. As a result of pressurizing the synthetic resin member 10 and the metal member 20 at the first pressure P1 at the time of raising the temperature of the metal joining surface 22, heat is more likely to be transferred from the metal joining surface 22 to the resin joining surface 12, and the temperature of the resin joining surface 12 can be quickly raised to the first temperature T1.

In addition, it is also possible that the press apparatus 53 does not pressurize the synthetic resin member 10 and the metal member 20 until the temperature of the metal joining surface 22 reaches the first temperature T1, and, after the first temperature T1 is reached, then the press apparatus 53 pressurizes the synthetic resin member 10 and the metal member 20 at the first pressure P1.

Then, after the press apparatus 53 pressurizes the synthetic resin member 10 and the metal member 20 at the first pressure P1 for the predetermined time Sp1, the first step is completed, and a transition is made to the second step.

Upon transition to the second step, the heating apparatus 52 stops heating the metal member 20 or reduces the amount of heating. In addition, the press apparatus 53 pressurizes the synthetic resin member 10 and the metal member 20 such that the pressure detected by the pressure sensor 57 becomes a second pressure P2 that is higher than the first pressure P1.

In the second step, when the heating apparatus 52 stops heating the metal member 20 or reduces the amount of heating, the metal joining surface 22 can no longer maintain the first temperature T1, and the temperature decreases from the first temperature T1. While the temperature of the metal joining surface 22 is decreasing, the press apparatus 53 pressurizes the synthetic resin member 10 and the metal member 20 at the second pressure P2.

The press apparatus 53 pressurizes the synthetic resin member 10 and the metal member 20 at the second pressure P2 until the temperature of the resin joining surface 12 and the metal joining surface 22 drops to at least a second temperature T2. Here, the second temperature T2 is a temperature that is lower than the first temperature T1. The press apparatus 53 preferably continues to pressurize the synthetic resin member 10 and the metal member 20 until the temperature of the synthetic resin member 10 and the metal member 20 drops to a third temperature T3 that is lower than the second temperature T2.

Then, after the temperature of the synthetic resin member 10 and the metal member 20 drops to a predetermined temperature, the metal-resin joined body 30, in which the synthetic resin member 10 is joined to the metal member 20, is taken out from the joining apparatus 50.

Here, the first temperature T1 can be equal to or higher than a melting point Tm of the thermoplastic resin that constitutes the synthetic resin member 10 and equal to or lower than the decomposition temperature of the thermoplastic resin (i.e., equal to or lower than the temperature at which the thermoplastic resin begins to vaporize). Preferably, the first temperature T1 can be set to be equal to or lower than a temperature that is 20°C lower than the decomposition temperature of the thermoplastic resin. More preferably, the first temperature T1 can be set to be equal to or higher than the melting point Tm of the thermoplastic resin that constitutes the synthetic resin member 10 and equal to or lower than a temperature (first upper limit temperature) that is 20°C higher than the melting point Tm of the thermoplastic resin (Tm ≤ T1 ≤ Tm + 20°C).

The second temperature T2 only needs to be a temperature that is lower than the first temperature T1, and is preferably equal to or lower than a temperature (second upper limit temperature) that is 10°C higher than the melting point Tm of the thermoplastic resin that constitutes the synthetic resin member 10 (T2 ≤ Tm + 10°C), and it is preferable that the second temperature T2 is set to be equal to or higher than a temperature (lower limit temperature) that is 20°C lower than the melting point Tm of the thermoplastic resin that constitutes the synthetic resin member 10. That is, it is preferable that the second temperature T2 is set to be equal to or higher than the lower limit temperature and equal to or lower than the second upper limit temperature (Tm- 20°C ≤ T2 < Tm + 10°C).

The third temperature T3 only needs to be a temperature that facilitates the handling of the obtained metal-resin joined body 30, and may be, for example, equal to or lower than the glass transition point of the thermoplastic resin that constitutes the synthetic resin member 10 or 50°C, whichever temperature is lower. In addition, the first pressure P1, at which the synthetic resin member 10 and the metal member 20 are pressurized in the first step, only needs to be a pressure at which a contact for the purpose of making the temperature of the synthetic resin member 10 the same as that of the metal member due to the heat of the heated metal member 20 through thermal conduction can be sufficiently obtained, and is preferably a pressure equal to or lower than the compressive yield stress of the thermoplastic resin. It is difficult to unconditionally specify the first pressure P1 as it varies depending on the thermoplastic resin that constitutes the synthetic resin member 10, but a pressure of 10 MPa or less is preferable.

The second pressure P2, at which the synthetic resin member 10 and the metal member 20 are pressurized in the second step, only needs to be a pressure that is higher than the first pressure P1, and is preferably 10 MPa or more and 100 MPa or less, for example.

Incidentally, upon transition from the first step to the second step, it is possible that the settings of either the heating apparatus 52 or the press apparatus 53 are changed first, and then the settings of the other are changed, and it is also possible to change both settings at the same time.

That is, upon transition from the first step to the second step, the pressure applied by the press apparatus 53 may be changed from the first pressure P1 to the second pressure P2 after heating by the heating apparatus 52 is stopped or the amount of heating is reduced, or it is also possible to change the pressure applied by the press apparatus 53 at the same time as heating by the heating apparatus 52 is stopped or the amount of heating is reduced. In addition, it is also possible that heating by the heating apparatus 52 is stopped or the amount of heating is reduced immediately after the pressure applied by the press apparatus 53 is changed.

In addition, although this embodiment has described the case where the press apparatus 53 moves the synthetic resin member 10 toward the metal member 20, it is also possible to move the metal member 20 toward the synthetic resin member 10.

In addition, the synthetic resin member 10 and the metal member 20 may be joined locally, or the synthetic resin member 10 and the metal member 20 may also be joined over a wider area. In addition, the plane shape of the joining point may also be any shape such as dotted, linear, or planar.

### (5) Effects

In the case where the metal joining surface 22 heated to the high first temperature T1 is brought into contact with the resin joining surface 12, when the synthetic resin member 10 and the metal member 20 are pressurized at a high pressure, the synthetic resin member 10, which has been heated by heat from the metal member 20, is likely to deform significantly. However, in the case where the synthetic resin member 10 is joined to the metal member 20, it is preferable that the synthetic resin member 10 and the metal member 20 are heated while being pressurized, whereby the resin joining surface 12 of the synthetic resin member 10 is uniformly heated by heat from the metal member 20.

In this embodiment, in the first step, the synthetic resin member 10 and the metal member 20 are pressurized at the first pressure P1 that is weaker than the second pressure P2. Accordingly, while suppressing deformation of the synthetic resin member 10, heat from the metal member 20 is more likely to be uniformly transferred from the metal joining surface 22 to the resin joining surface 12. As a result, the thermoplastic resin that constitutes the resin joining surface 12 is more likely to spread uniformly over the metal joining surface 22 and adhere thereto. In addition, even in the case where the metal joining surface 22 has formed thereon a roughened portion, as a result of pressurization at the weak first pressure P1, the inside of the roughened portion is more likely to be filled with the thermoplastic resin that constitutes the resin joining surface 12.

In addition, in the thermoplastic resin that constitutes the synthetic resin member 10, the resin density decreases as the temperature increases. Therefore, in the synthetic resin member 10 that has received heat from the metal member 20 upon the joining of the metal member 20 and the synthetic resin member 10, the resin density near the resin joining surface 12 is likely to decrease.

In this embodiment, in the second step that follows the first step, the synthetic resin member 10 and the metal member 20 are pressurized at the second temperature T2, which is lower than the first temperature T1, and the second pressure P2, which is higher than the first pressure P1. Therefore, it is possible to increase the resin density near the resin joining surface 12 while suppressing undesirable deformation of the synthetic resin member 10 molded into a predetermined shape.

That is, in this embodiment, through the first step, while suppressing deformation of the synthetic resin member 10, the resin joining surface 12 in contact with the metal joining surface 22 is uniformly heated such that the thermoplastic resin that constitutes the resin joining surface 12 uniformly adheres to the metal joining surface 22. Then, through the second step, while increasing the applied pressure to further improve the adhesion of the thermoplastic resin to the metal joining surface 22, the resin density of the synthetic resin member 10 near the resin joining surface 12 is enhanced. As a result, the metal-resin joined body 30 having high joining strength can be obtained.

In this embodiment, when the first temperature T1 is a temperature that is equal to or higher than the melting point Tm of the thermoplastic resin that constitutes the synthetic resin member 10, the fluidity of the thermoplastic resin near the resin joining surface 12 increases during the first step, and the adhesion of the resin joining surface 12 to the metal joining surface 22 can be further improved. In addition, as a result of setting the first temperature T1 to be equal to or lower than the upper limit temperature that is 20°C higher than the melting point Tm of the thermoplastic resin that constitutes the synthetic resin member 10, it is possible to suppress thermal decomposition of a resin material that constitutes the synthetic resin member 10 or undesirable deformation of the synthetic resin member 10 that occurs when the metal member 20 and the synthetic resin member 10 are pressurized at the first pressure P1 in the first step.

In this embodiment, when the second temperature T2 is a temperature lower than the melting point Tm of the thermoplastic resin that constitutes the synthetic resin member 10, even if the synthetic resin member 10 is pressurized at the second pressure P2 together with the metal member 20 during the second step, the synthetic resin member 10 is less likely to deform into an undesired shape. In addition, as a result of setting the second temperature T2 to be equal to or higher than the lower limit temperature that is 20°C lower than the melting point Tm of the thermoplastic resin that constitutes the synthetic resin member 10, the resin density near the resin joining surface 12 can be effectively enhanced in the second step.

### (6) Modification Examples

A modification example of the above embodiment will be described. In the above embodiment, upon transition from the first step to the second step, the pressure applied by the press apparatus 53 is changed from the first pressure P1 to the second pressure P2 without considering the temperature of the metal joining surface 22.

In this modification example, as in the above embodiment, after the first step is executed for the predetermined time Sp1, first, heating by the heating apparatus 52 is stopped or the amount of heating is reduced. Then, the temperature of the resin joining surface 12 and the metal joining surface 22 is lowered (cooled) to the second temperature T2 that is lower than the first temperature T1. After the temperature of the resin joining surface 12 and the metal joining surface 22 becomes the second temperature T2, the press apparatus 53 changes the pressure applied to the synthetic resin member 10 and the metal member 20 from the first pressure P1 to the second pressure P2 to start the second step.

Then, the press apparatus 53 continues to pressurize the synthetic resin member 10 and the metal member 20 until the temperature of the synthetic resin member 10 and the metal member 20 drops from the second temperature T2 to the third temperature T3.

Then, after the temperature of the synthetic resin member 10 and the metal member 20 drops to the predetermined temperature, the metal-resin joined body 30, in which the synthetic resin member 10 is joined to the metal member 20, is taken out from the joining apparatus 50.

Here, the first temperature T1 can be equal to or higher than the melting point Tm of the thermoplastic resin that constitutes the synthetic resin member 10 and equal to or lower than the decomposition temperature of the thermoplastic resin (i.e., equal to or lower than the temperature at which the thermoplastic resin begins to vaporize). Preferably, the first temperature T1 can be set to be equal to or higher than the melting point Tm of the thermoplastic resin that constitutes the synthetic resin member 10 and equal to or lower than a temperature (upper limit temperature) that is 20°C higher than the melting point Tm of the thermoplastic resin (i.e., Tm ≤ T1 ≤ Tm + 20°C).

In addition, the second temperature T2 only needs to be a temperature that is lower than the first temperature T1, and is preferably a temperature lower than the melting point Tm of the thermoplastic resin that constitutes the synthetic resin member 10, and it is preferable that the second temperature T2 is set to be equal to or higher than a temperature (lower limit temperature) that is 20°C lower than the melting point Tm of the thermoplastic resin that constitutes the synthetic resin member 10 (i.e., Tm- 20°C ≤ T2 < Tm).

In this modification example, after the temperature of the resin joining surface 12 and the metal joining surface 22 drops to the second temperature T2, the pressure applied by the press apparatus 53 is changed from the first pressure P1 to the second pressure P2. Thus, the pressure applied by the press apparatus 53 can be changed at an appropriate timing where the synthetic resin member 10 is not excessively deformed, and the metal-resin joined body 30 having high joining strength can be obtained while minimizing deformation of the synthetic resin member 10.

### (7) Examples

In order to specifically show the effects of the above embodiments, metal-resin joined bodies (test pieces) of Examples 1 and 2 and Comparative Examples 1 to 4 were prepared. Incidentally, the invention is not limited to Examples 1 and 2.

In each of Examples 1 and 2, with the heating apparatus 52 heating a metal joining surface to the first temperature T1, the press apparatus 53 pressurized a synthetic resin member and a metal member for one second at the first pressure P1 to execute the first step. Subsequently, heating by the heating apparatus 52 was stopped, and also the pressure applied by the press apparatus 53 was changed from the first pressure P1 to the second pressure P2 to execute the second step. The synthetic resin member 10 and the metal member 20 were pressurized by the press apparatus 53 at the second pressure P2 until the temperature of the synthetic resin member 10 and the metal member 20 became the third temperature T3, thereby preparing metal-resin joined bodies of Examples 1 and 2. Incidentally, in the second step, heating by the heating apparatus 52 was stopped and the pressure applied by the press apparatus 53 was changed at the same time.

In Comparative Examples 1 to 4, after executing the first step, the pressure applied by the press apparatus 53 was not changed, and heating by the heating apparatus 52 was stopped, thereby preparing metal-resin joined bodies.

Specifically, in each of Comparative Examples 1 to 4, with the heating apparatus 52 heating the metal joining surface 22 to the first temperature T1, the press apparatus 53 pressurized the synthetic resin member 10 and the metal member 20 for one second at the first pressure P1 to execute the first step. Subsequently, heating by the heating apparatus 52 was stopped while maintaining the pressure applied by the press apparatus 53 to the synthetic resin member 10 and the metal member 20 at the first pressure P1, and the synthetic resin member 10 and the metal member 20 were pressurized by the press apparatus 53 at the first pressure P1 until the temperature of the synthetic resin member 10 and the metal member 20 became the third temperature T3, thereby preparing metal-resin joined bodies of Modification Examples 1 to 4.

In Examples 1 to 2 and Comparative Examples 1 to 4, a synthetic resin member made of PPS resin and a metal member made of SUS304 and having its metal joining surface roughening-treated by laser irradiation were used. Details of the synthetic resin member, details of the metal member, and the joining area (overlap area) between the synthetic resin member and the metal member are as follows.

The first temperature T1, the third temperature T3, the first pressure P1, and the second pressure P2 in each of Examples 1 and 2 and Comparative Examples 1 to 4 are as shown in Table 1.

### - Synthetic Resin Member

Kind of thermoplastic resin: PPS resin (FZ-2100 manufactured by DIC Corporation, melting point: 280°C)
Size (length × width × thickness): 10 mm × 50 mm × 3 mm

### - Metal Member

Kind of metal: SUS304
Size (length × width × thickness): 18 mm × 40 mm × 1.5 mm

### - Joining Area between Synthetic Resin Member and Metal Member: 5 × 10 mm

The evaluation methods are as follows.

### (a) Joining Strength

In the test method specified in JIS K 6850, the dimension of the synthetic resin member, the dimension of the metal member, and the joining area between the synthetic resin member and the metal member were changed as described above, and other conditions were in accordance with the standards. Using a tensile tester (Shimadzu Corporation, Autograph AGX-V), measurement was performed at a tensile speed of 10 mm/min and a measurement temperature of 25°C. Incidentally, four test pieces were prepared for each of Examples 1 and 2 and Comparative Examples 1 to 4, and the average of the four measurements was taken as the joining strength of each example.

### (b) Compression Deformation Amount

The thickness of the synthetic resin member part of each obtained metal-resin joined body was measured, and the amount of change from the thickness of the synthetic resin member before joining (3 mm) was calculated. Incidentally, four test pieces were prepared for each of Examples 1 and 2 and Comparative Examples 1 to 4, and the average of the four change amounts was taken as the compression change amount of each example.

**[Table 1]**

| | Ex. 1 | Ex. 2 | Comp. Ex. 1 | Comp. Ex. 2 | Comp. Ex. 3 | Comp. Ex. 4 |
|---|---|---|---|---|---|---|
| First Pressure P1 (MPa) | 0.5 | 0.5 | 10 | 10 | 0.5 | 0.5 |
| Second Pressure P2 (MPa) | 10 | 10 | - | - | - | - |
| First Temperature T1 (°C) | 290 | 265 | 290 | 265 | 290 | 265 |
| Second Temperature T2 (°C) | 60 | 60 | 60 | 60 | 60 | 60 |
| Joining Strength (MPa) | 34.3 | 26.3 | 27.1 | 25.7 | 3.5 | 0 |
| Compression Change Amount (mm) | 0.18 | 0.09 | 1.23 | 0.89 | 0.01 | 0.005 |

The results are as shown in Table 1. In Example 1, compared to Comparative Example 1, while significantly suppressing compression change of the synthetic resin member, high joining strength was obtained. In Example 2, while ensuring the same level of joining strength as in Comparative Examples 1 and 2, it was possible to significantly suppress compression change of the synthetic resin member compared to Comparative Examples 1 and 2.

In addition, in Comparative Example 3, although it was possible to keep the compressive deformation amount small, no practical joining strength was obtained. In Comparative Example 4, the synthetic resin member did not join to the metal member.

### Reference Signs List

10: Synthetic resin member
12: Resin joining surface
20: Metal member
22: Metal joining surface
30: Metal-resin joined body
50: Joining apparatus
51: Stage
52: Heating apparatus
53: Press apparatus
54: Rod
55: Pressurization section
56: Temperature sensor
57: Pressure sensor
60: Control apparatus

## Claims

1. A method for producing a metal-resin joined body by bringing a metal joining surface of a metal member into contact with a resin joining surface of a resin member molded into a predetermined shape to join the metal member and the resin member together,
the method for producing a metal-resin joined body comprising:
a first step of bringing the resin joining surface into contact with the metal joining surface heated to a first temperature, and pressurizing the metal member and the resin member at a first pressure; and
a second step of, with the metal joining surface having a second temperature that is lower than the first temperature, pressurizing the metal member and the resin member at a second pressure that is higher than the first pressure.

2. The method for producing a metal-resin joined body according to claim 1, wherein
after the first step is executed, the heating of the metal joining surface is stopped or the amount of heating is reduced, and also the pressure at which the metal member and the resin member are pressurized is changed from the first pressure to the second pressure to execute the second step.

3. The method for producing a metal-resin joined body according to claim 1, wherein
after the first step is executed, the temperature of the metal joining surface is lowered to the second temperature, and then the pressure at which the metal member and the resin member are pressurized is changed from the first pressure to the second pressure to execute the second step.

4. The method for producing a metal-resin joined body according to any one of claims 1 to 3, wherein
the first temperature is a temperature that is equal to or higher than a melting point of a resin material that constitutes the resin member.

5. The method for producing a metal-resin joined body according to claim 4, wherein
the first temperature is equal to or higher than the melting point of the resin material and equal to or lower than an upper limit temperature that is 20°C higher than the melting point of the resin material.

6. The method for producing a metal-resin joined body according to claim 3, wherein
the second temperature is equal to or lower than a temperature that is 10°C higher than a melting point of a resin material that constitutes the resin member.

7. The method for producing a metal-resin joined body according to claim 6, wherein
the first temperature is equal to or higher than the melting point of the resin material and equal to or lower than an upper limit temperature that is 20°C higher than the melting point of the resin material, and
the second temperature is equal to or lower than a temperature that is 10°C higher than the melting point of the resin material and equal to or higher than a lower limit temperature that is 20°C lower than the melting point of the resin material.
